# EUROPÄISCHE PATENTSCHRIFT

(11) **EP 3 123 697 B1**
(45) Veröffentlichungstag und Bekanntmachung des Hinweises auf die Patenterteilung: **15.07.2020**
(21) Anmeldenummer: 15709837.7
(22) Anmeldetag: 27.02.2015
(51) Int. Cl.: H04L 29/08, H04W 12/08

(54) **VERFAHREN ZUM HERSTELLEN EINER DRAHTLOSEN VERBINDUNG**
METHOD FOR ESTABLISHING A WIRELESS CONNECTION
PROCÉDÉ D'ÉTABLISSEMENT D'UNE LIAISON SANS FIL

(30) Priorität: 22.03.2014 DE 102014004182
(43) Veröffentlichungstag der Anmeldung: 01.02.2017
(73) Patentinhaber: WABCO GmbH, 30453 Hannover (DE)
(72) Erfinder: RISSE, Rainer, 30982 Pattensen-Reden (DE); STENDER, Axel, 31787 Hameln (DE); WITTE, Norbert, 31867 Lauenau (DE)
(74) Vertreter: Lauerwald, Jörg
(86) Internationale Anmeldenummer: PCT/EP2015/000468
(87) Internationale Veröffentlichungsnummer: WO 2015/144284

(56) Entgegenhaltungen:
- WO-A1-2013/124730
- DE-A1-102011 004 959
- DE-A1-102012 012 565

## Beschreibung

Die Erfindung betrifft ein Verfahren gemäß Anspruch 1. Daneben betrifft die Erfindung ein Steuergerät gemäß Anspruch 15.

In einem Fahrzeug mit elektronischem Bremssystem ist typischerweise ein elektronisches Steuergerät zum Ansteuern der Bremsen und für die Wahrnehmung weiterer Funktionen vorgesehen. Hierzu sind an das Steuergerät Sensoren angeschlossen und elektromagnetische Stellventile. Zusätzlich erhält das Steuergerät Daten über ein CAN-Bussystem oder eine andere Datenverbindung.

Die Übermittlung von Stellbefehlen, das Auslesen von Informationen und/oder eine Konfiguration des Steuergerätes erfolgen über die Datenverbindung. Beispielsweise wird die Winkelstellung eines Bremspedals für die Betriebsbremse über die Datenverbindung übermittelt. Ebenso signalisiert das Steuergerät über die Datenverbindung an entsprechend angeordnete Anzeigegeräte, zum Beispiel in einem Fahrerhaus, die Aktivität einer Antiblockierfunktion oder ausgewählte Sensordaten. Im Wesentlichen kommuniziert der Fahrer im Fahrerhaus mit Hilfe vorgesehener Anzeigen und Bedienelemente mit dem Steuergerät.

Auch Anhängefahrzeuge mit elektronischem Bremssystem weisen ein elektronisches Steuergerät auf, im Wesentlichen mit den zuvor genannten Funktionen. Möglich sind auch anhängerspezifische Funktionen, zum Beispiel selbsttätiges Einbremsen bei instabilen Fahrzuständen oder zur Vermeidung derselben. Zwischen Zugfahrzeug und Anhängefahrzeug bestehen standardisierte Verbindungen, die beim Ankoppeln des Anhängefahrzeugs gesteckt werden müssen, nämlich zwei pneumatische Verbindungen (Vorratsdruck und Steuerdruck) und eine elektrische Verbindung, die die Datenverbindung beinhaltet.

Wünschenswert ist eine hundertprozentige Kompatibilität im Hinblick auf die Möglichkeit zur Anzeige der Daten aus dem Steuergerät des Anhängefahrzeugs und zur Beeinflussung des Steuergeräts des Anhängefahrzeugs einerseits mit den betreffenden Funktionen im Zugfahrzeug andererseits. Praktisch ist eine derartige Kompatibilität nicht möglich, da Anhängefahrzeuge und Zugfahrzeuge unterschiedlich und nach Bedarf zusammengestellt werden. Aufgrund unterschiedlicher Hersteller und der vom Benutzer ausgewählten Funktionalitäten können die Steuergeräte im Anhängefahrzeug und Zugfahrzeug unterschiedliche Eigenschaften aufweisen. Wünschenswert ist deshalb die Bereitstellung einer Anzeige- und Bedieneinheit für den Fahrer, wobei die Einheit mit dem Steuergerät des Anhängefahrzeugs in Verbindung steht.

Beim Ankoppeln des Anhängefahrzeugs an das Zugfahrzeug muss eine Verwechselung des Anhängefahrzeugs vermieden werden. Insbesondere auf großen Betriebshöfen können Verwechselungen der Anhängefahrzeuge auftreten. Umso wichtiger ist eine eindeutige Identifizierung des Anhängefahrzeugs durch den Fahrer. Die hierfür erforderlichen Maßnahmen sollten schnell und unkompliziert durchführbar sein.

Aus der WO 2013/124730 A1 ist es bekannt, ein WLAN-fähiges Mobiltelefon des Fahrers mit dem Steuergerät des Anhängefahrzeugs über eine WLAN-Verbindung oder eine andere drahtlose Verbindung zu koppeln. Zur Vermeidung einer unerwünschten Verbindung, etwa mit dem Smartphone eines Fahrers, welcher ein anderes Anhängefahrzeug abholen will, kann in einem Speicher im Anhängefahrzeug eine Liste von zugelassenen MAC-Adressen abgelegt sein. Bei den MAC-Adressen handelt es sich um eindeutige Kennungen WLAN-fähiger Endgeräte. Außerdem kann das Anhängefahrzeug die eigene Fahrzeugnummer und eine SSID-Kennung des eigenen WLAN-Moduls übermitteln. Verwechselungen sind bei diesem Verfahren aber nur ausgeschlossen, wenn der Fahrer an seinem Smartphone zusätzliche Eingaben vornimmt oder im Speicher des Anhängefahrzeugs nur eine einzige MAC-Adresse hinterlegt ist.

Aufgabe der vorliegenden Erfindung ist die Schaffung eines Verfahrens zum Herstellen einer drahtlosen Verbindung zwischen einem Anhängefahrzeug und dem Smartphone des Benutzers in Verbindung mit einer möglichst einfachen und eindeutigen Verifizierung der Teilnehmer an der Verbindung. Insbesondere soll die umständliche Eingabe einer mehrstelligen Identifizierungs-Nummer vermieden werden.

Die erfindungsgemäße Lösung der Aufgabe ergibt sich aus den Merkmalen des Anspruchs 1. Hergestellt werden soll eine drahtlose Verbindung zwischen einem ersten Sender-Empfänger in einem Anhängefahrzeug mit elektronischem Bremssystem (EBS) einerseits und mindestens einem zweiten Sender-Empfänger außerhalb des Anhängefahrzeugs andererseits, wobei der erste Sender-Empfänger einem elektronischen Steuergerät im Anhängefahrzeug zugeordnet ist, und wobei das Anhängefahrzeug an ein Zugfahrzeug gekoppelt ist und eine leitungsgebundene Verbindung besteht, über die Signale vom Zugfahrzeug an das Anhängefahrzeug übermittelt werden können. Erfindungsgemäß weist das Verfahren folgende Schritte auf:
a) Im Zugfahrzeug wird ein Auslösesignal generiert und leitungsgebunden zum Steuergerät im Anhängefahrzeug übermittelt,
b) nach Eingang des Auslösesignals im Steuergerät des Anhängefahrzeugs stellt der erste Sender-Empfänger mit dem mindestens einen zweiten Sender-Empfänger eine vorläufige Verbindung her,
c) der mindestens eine zweite Sender-Empfänger zeigt mittels einer Ausgabeeinheit die vorläufige Verbindung oder eine andere Art einer Bestätigungsaufforderung an,
d) sofern im Steuergerät im Anhängefahrzeug innerhalb einer definierten Zeitspanne ein Signal als Bestätigung der Bestätigungsaufforderung eingeht - leitungsgebunden und/oder drahtlos -, wird durch das Steuergerät eine dauerhafte Verbindung zwischen dem ersten Sender-Empfänger und dem zweiten Sender-Empfänger hergestellt.

Bei dem Auslösesignal handelt es sich vorzugsweise um das Einschalten der Zündung im Zugfahrzeug durch den Fahrer, während die übrigen Schritte - mit Ausnahme der Bestätigung - durch geeignete Software des Steuergerätes automatisiert sind. Das Steuergerät im Anhängefahrzeug erkennt das Einschalten der Zündung und übergibt diese Information an den zugeordneten ersten Sender-Empfänger. Letzterer sucht in der Umgebung nach drahtlos kontaktierbaren Sender-Empfängern, also nach mindestens einem zweiten Sender-Empfänger, und stellt mit wenigstens einem zweiten Sender-Empfänger eine vorläufige Verbindung her. Der zweite Sender-Empfänger zeigt die vorläufige Verbindung oder eine ausdrückliche Bestätigungsaufforderung an.

Bei dem zweiten Sender-Empfänger handelt es sich vorzugsweise um das Smartphone des Fahrers. Als Smartphone wird hier insbesondere ein tragbares drahtloses Telefon mit Kommunikationsschnittstellen verstanden. Der Fahrer muss nach Erkennen der Bestätigungsaufforderung nun innerhalb einer definierten Zeitspanne ein Bestätigungssignal übergeben. Sofern der Fahrer die Zeitspanne einhält, gehen erster Sender-Empfänger und zweiter Sender-Empfänger davon aus, dass der jeweils andere Kommunikationspartner der richtige ist. Aus der vorläufigen Verbindung wird eine dauerhafte Verbindung, die bis auf Weiteres bestehen bleibt. Bei Nichteinhalten der Zeitspanne wird die Verbindung zwischen erstem Sender-Empfänger und zweitem Sender-Empfänger abgebrochen.

Als Sender-Empfänger werden vorteilhafter Weise WLAN-fähige und/oder Bluetooth-fähige Module oder Geräte verwendet. Verfahren und Protokolle für WLAN-Verbindungen und Bluetooth-Verbindungen sind bekannt und standardisiert, auch aus anderen Anwendungsbereichen, beispielsweise die Anbindung des Smartphones an ein Heimnetzwerk nach dem WLAN-Standard 802.11.

Als Sender-Empfänger außerhalb des Anhängefahrzeugs wird vorteilhafterweise ein Mobilfunk-fähiges Gerät zumindest mit der Mobilfunktechnik GSM verwendet. Alternativ können auch modernere oder andere Mobilfunktechniken Anwendung finden, etwa UMTS oder LTE usw.

Besonders vorteilhaft ist die Verwendung eines Smartphones als zweiter Sender-Empfänger. Das Smartphone ist WLAN-fähig und Internet-fähig. Auf dem Smartphone ist eine spezielle Software, eine App installiert, die auf die Funktionen des Steuergerätes im Anhängefahrzeug abgestimmt ist und die beispielsweise vom Hersteller des Steuergerätes bereitgestellt werden kann. Der Hersteller des Steuergerätes muss somit keine spezielle Hardware auf Seiten des Fahrers zur Verfügung stellen. Es genügen ein WLAN-fähiges und vorzugsweise auch Internet-fähiges Smartphone und eine aufgespielte Software, mit der die Daten aus dem Anhängefahrzeug anzeigbar und/oder Funktionen im Anhängefahrzeug steuerbar sind.

Vorteilhafterweise wird als Steuergerät das für das elektronische Bremssystem vorgesehene Steuergerät verwendet. Der erste Sender-Empfänger ist als Modul in das Steuergerät integriert oder als externes Modul mit dem Steuergerät verbunden. Bei dem internen oder externen Modul handelt es sich insbesondere um ein WLAN-Modul. Das externe Modul kann auch Bestandteil eines weiteren Steuergerätes sein.

Erfindungsgemäß kann als Auslösesignal ein Einschalten der Zündung am Zugfahrzeug verwendet werden. Bei angekoppeltem Anhängefahrzeug wird das Auslösesignal über eine Datenleitung (CAN-Bus, Powerline-Verbindung oder eine andere Datenverbindung) zum Steuergerät im Anhängefahrzeug übertragen.

Als Zeitspanne für den Eingang des Signals zur Bestätigung werden vorzugsweise 15 Sekunden oder weniger festgelegt, insbesondere fünf bis zehn Sekunden. Durch die festgelegte Zeitspanne werden spätere Aktionen, insbesondere anderer Sender-Empfänger nicht mehr angenommen.

Nach einem weiteren Gedanken der Erfindung kann das Signal zur Bestätigung aus der Betätigung einer im Fahrerhaus des Zugfahrzeugs angeordneten Bedieneinheit abgeleitet werden. Die Bedieneinheit im Fahrerhaus ist über eine entsprechende Leitung im Zugfahrzeug mit dem Anhängefahrzeug verbunden, etwa über eine Datenverbindung, eine elektrische Verbindung, eine pneumatische Leitung (Vorratsdruck, Steuerdruck) oder auf andere Weise. Eine Bedieneinheit im Fahrerhaus kann auch zum Ausgeben und Übertragen des Auslösesignals genutzt werden. Das Steuergerät im Anhängefahrzeug muss nur darauf abgestimmt sein.

Erfindungsgemäß kann das Signal zur Bestätigung aus der Betätigung eines Fußbremspedals abgeleitet werden. Die Betätigung des Fußbremspedals bewirkt typischerweise zumindest zweierlei, nämlich eine Änderung im pneumatischen Steuerdruck und eine Betätigung des elektrischen Bremslichts. Sofern das Bremslichtsignal über eine entsprechende Leitung zum Anhängefahrzeug übermittelt wird, kann dieses vom Steuergerät des Anhängefahrzeugs als Signal zur Bestätigung ausgewertet werden. Analog gilt dies für eine Änderung des Steuerdrucks. Die Änderung kann durch dem Steuergerät des Anhängefahrzeugs zugeordnete Sensoren erkannt werden.

Nach einem weiteren Gedanken der Erfindung kann das Signal zur Bestätigung aus dem Lösen und Wiedereinlegen einer Parkbremse abgeleitet werden. Der Fahrer löst im Zugfahrzeug die Parkbremse zumindest teilweise und zieht sie anschließend wieder an. Durch das damit verbundene Absinken oder Ansteigen des Steuerdrucks im Anhängefahrzeug ergibt sich das Signal zur Bestätigung.

Ebenfalls im Rahmen der Erfindung ist es, wenn das Signal zur Bestätigung aus einer Eingabe am zweiten Sender-Empfänger und einer drahtlosen Übermittlung dieser Eingabe zum ersten Sender-Empfänger abgeleitet wird. Vorzugsweise ist der zweite Sender-Empfänger mit einem Bildschirm ausgestattet. Am Bildschirm erscheint die Aufforderung zur Bestätigung. Der Bediener bestätigt innerhalb der vorgegebenen Zeitspanne durch eine einfache Eingabe. Möglich ist auch die Eingabe einer persönlichen PIN-Nummer, die der Fahrer beispielsweise zusammen mit seinem Auftrag für die Übernahme des Anhängefahrzeugs erhalten hat.

Nach einem weiteren Gedanken der Erfindung wird bei Eingang des Auslösesignals überprüft, ob ein Vorratsdruck im Anhängefahrzeug noch unterhalb eines Grenzwertes liegt, insbesondere unterhalb von 6 bar. Sofern der Grenzwert unterschritten ist, ergeht die Bestätigungsaufforderung erst, wenn das Anhängefahrzeug einen Vorratsdruck oberhalb eines Grenzwertes aufweist, insbesondere oberhalb von 6 bar.

Erfindungsgemäß kann weiterhin vorgesehen sein, dass eine dauerhafte Verbindung nicht hergestellt oder aufrechterhalten wird, wenn innerhalb der definierten Zeitspanne im Anhängefahrzeug Bestätigungssignale von mehr als einem zweiten Sender-Empfänger eingehen. Vorzugsweise wird das Ende der Zeitspanne abgewartet und nur dann eine dauerhafte Verbindung zum zweiten Sender-Empfänger hergestellt, wenn kein weiterer zweiter Sender-Empfänger erkannt wird. Alternativ kann nach Ablauf der Zeitspanne die bereits hergestellte dauerhafte Verbindung wieder getrennt werden, sobald ein weiterer zweiter Sender-Empfänger erkannt wird.

Vorteilhafterweise wird nach dem Eingang von Bestätigungssignalen von mehr als einem zweiten Sender-Empfänger eine neue Zeitspanne gestartet und eine neue Bestätigung erwartet. Hierzu kann entweder die bereits aufgegebene Aufforderung zur Bestätigung stehen bleiben oder eine neue Aufforderung am zweiten Sender-Empfänger erscheinen.

Gegenstand der Erfindung ist schließlich auch ein Steuergerät für ein Anhängefahrzeug mit elektronischem Bremssystem und zur Durchführung der durch das Steuergerät ausgeführten Schritte des Verfahrens der voranstehend beschriebenen Art. Dem Steuergerät ist ein Sender-Empfänger zugeordnet, intern oder extern. Außerdem weist das Steuergerät die für die beschriebenen Funktionen erforderliche Software auf.

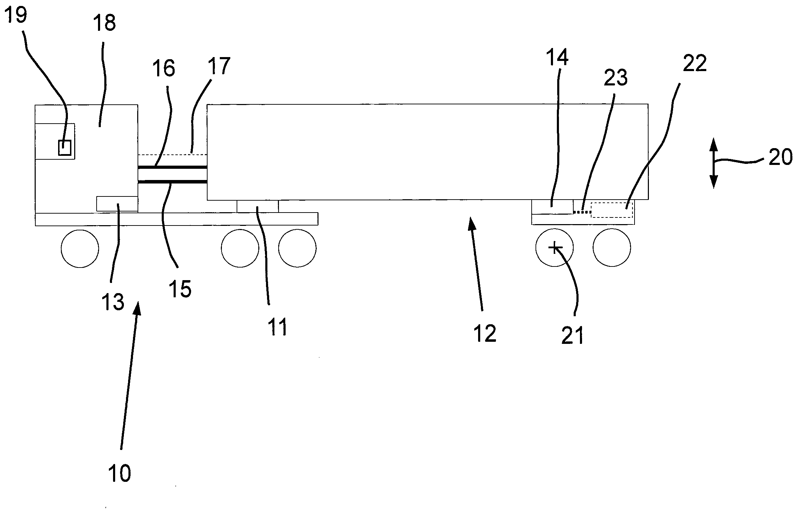

Weitere Merkmale der Erfindung ergeben sich aus der Beschreibung im Übrigen und aus den Ansprüchen. Vorteilhafte Ausführungsbeispiele der Erfindung werden nachfolgend anhand der Zeichnung näher erläutert.

Die einzige Figur zeigt einen Lastzug mit Auflieger, nämlich ein Zugfahrzeug 10 mit Sattel 11 und ein Anhängefahrzeug 12. Zugfahrzeug 10 und Anhängefahrzeug 11 sind jeweils mit einem elektronischen Bremssystem für eine pneumatische Bremsanlage ausgestattet. In beiden Fahrzeugen ist jeweils ein elektronisches Steuergerät für das elektronische Bremssystem vorgesehen, nämlich im Zugfahrzeug ein Steuergerät 13 und im Anhängefahrzeug ein Steuergerät 14.

Beim Ankoppeln des Anhängefahrzeugs 12 an das Zugfahrzeug 10 werden wenigstens drei Leitungsverbindungen hergestellt, nämlich eine pneumatische Steuerdruck-Verbindung 15, eine pneumatische Vorratsdruck-Verbindung 16 und eine elektrische Verbindung 17. Die elektrische Verbindung 17 enthält unter anderem eine Leitung für ein Bremslichtsignal des Zugfahrzeugs und optional eine Leitung für ein CAN-Datenbussystem. Letztere kann auch Gegenstand einer eigenen, vierten Leitungs-Verbindung sein.

Die beiden Steuergeräte 13, 14 erhalten Signale von angeschlossenen Sensoren, insbesondere Raddrehzahlsensoren, Querbeschleunigungssensoren, Drucksensoren usw. Außerdem sind die Steuergeräte 13, 14 an den CAN-Datenbus angeschlossen (nicht gezeigt). Im Fahrerhaus 18 sind Bedieneinheiten und Anzeigeelemente für den Fahrer vorgesehen, mit denen der Fahrer das Fahrzeug und die Steuergeräte 13, 14 mittelbar oder unmittelbar beeinflusst, etwa ein Fußbremspedal, ein Handbremshebel, Schalter für elektrische oder pneumatische Verbraucher usw. (jeweils nicht gezeigt).

Der Fahrer ist im Besitz eines Smartphones 19, welches er bei sich führt und welches Internet-fähig sein kann und eine WLAN-Verbindung herstellen kann. Auf dem Smartphone 19 ist als Software eine App installiert, mit der das Steuergerät 14 im Anhängefahrzeug 12 ansprechbar ist.

Das Steuergerät 14 ist mit einem WLAN-Modul ausgestattet und kann über dieses mit dem Smartphone 19 kommunizieren. Im Steuergerät 14 sind spezielle, auf das Anhängefahrzeug 12 zugeschnittene Funktionen implementiert, beispielsweise ein Anheben oder Absenken insgesamt, siehe Doppelpfeil 20, oder das Anheben oder Absenken einer Liftachse 21. Hierzu können in bekannter Weise pneumatische Stellglieder vom Steuergerät 14 angesteuert werden. Außerdem sind an das Steuergerät 14 Sensoren angeschlossen, die beispielsweise Auskunft geben über Achslasten, Reifendrücke und Kippwinkel des Chassis relativ zu den Achsen. Im Steuergerät 14 können diese Daten gespeichert sein, ebenso weitere Daten, wie gespeicherte Fehlermeldungen.

Das genannte WLAN-Modul kann auch in einem weiteren Steuergerät 22 verbaut sein und mit dem Steuergerät 14 über eine Datenschnittstelle, z. B. einen CAN-Datenbus 23, kommunizieren.

Das Auslesen der genannten Informationen einerseits und die Ausübung der beschriebenen Funktionen andererseits kann der Fahrer bequem vom Fahrerhaus über sein Smartphone erledigen. Hierzu ist lediglich die genannte App auf dem Smartphone sowie eine drahtlose Verbindung zwischen dem Smartphone und dem Steuergerät 14 oder dem weiteren Steuergerät 22 des Anhängefahrzeugs 12 erforderlich. Zur Vermeidung von Verwechselungen und zur Verifizierung der WLAN-Verbindung führt der Fahrer nacheinander folgende Schritte aus:
a) das Anhängefahrzeug 12 wird an das Zugfahrzeug 10 angekoppelt, die Verbindungen 15, 16 und 17 werden hergestellt.
b) Der Fahrer schaltet am Zugfahrzeug 10 die Zündung ein.
c) Das Steuergerät 14 (oder 22) erkennt die eingeschaltete Zündung des Zugfahrzeugs 10 und sendet über sein WLAN-Modul eine Bestätigungsanfrage aus. Hierzu sendet das WLAN-Modul an alle erreichbaren Sender-Empfänger die genannte Bestätigungsanfrage und stellt so eine vorläufige Verbindung her. Zugleich startet das WLAN-Modul des Steuergerätes 14 (oder 22) eine Zeitspanne von fünf Sekunden.
d) Das Smartphone 19 des Fahrers zeigt die Bestätigungsanfrage an. Sofern weitere Smartphones mit geeigneter Software in der Nähe sind, zeigen auch diese die Bestätigungsanfrage an.
e) Der Fahrer tritt innerhalb der Zeitspanne von fünf Sekunden die Fußbremse.
f) Gegebenenfalls kann der Fahrer zusätzlich an seinem Smartphone 19 eine Bestätigung eingeben.
g) Über die elektrische Verbindung 17 gelangt das Bremslichtsignal zum Anhängefahrzeug 12 und zum Steuergerät 14 (oder 22). Letzteres akzeptiert die Bestätigung und baut eine dauerhafte WLAN-Verbindung zum Smartphone 19 auf. Damit ist sichergestellt, dass der "richtige" Fahrer mit seinem Smartphone Zugriff auf das Steuergerät 14 (oder 22) des Anhängefahrzeugs 12 hat.
h) Alternativ kann anstelle des elektrischen Bremslichtsignals auch das Ansteigen des pneumatischen Steuerdrucks im Anhängefahrzeug durch Sensoren ausgewertet werden.

Je nach Ausgestaltung der elektrischen Verbindung 17 kann eine Übertragung des Bremslichtsignals gerade nicht vorgesehen sein. In diesem Fall bestätigt der Fahrer nicht die Fußbremse in Schritt e), sondern löst im Zugfahrzeug einmal die Parkbremse zumindest teilweise und legt sie wieder ein. Dadurch ergibt sich eine Änderung des Vorratsdrucks, die vom Steuergerät 14 (oder 22) über Sensoren auslesbar ist und so als Bestätigung verstanden werden kann. Vorzugsweise ist in diesem Fall vorgesehen, dass die Bestätigungsanfrage gemäß Schritt c) erst versendet wird, wenn im Anhängefahrzeug ein Vorratsdruck über 6 bar vorliegt.

Gemäß einer weiteren Alternative ist vorgesehen, dass Schritt f) zwingend ist, d. h., der Fahrer muss die Bestätigungsanfrage auch an seinem Smartphone bestätigen. Falls das Steuergerät 14 (oder 22) innerhalb der vorgesehenen Zeitspanne von beispielsweise 10 Sekunden mehr als eine Bestätigung erhält, werden alle Bestätigungen für ungültig erklärt und ein weiterer Versuch gestartet. Die dauerhafte WLAN-Verbindung wird erst hergestellt, wenn nur eine Bestätigung innerhalb der Zeitspanne eingeht.

Eine weitere Alternative besteht darin, dass der Fahrer als Bestätigung nur über sein Smartphone einen PIN-Code eingibt. Dies kann dann sinnvoll sein, wenn sich der Fahrer nicht im Fahrerhaus aufhält. Den PIN-Code hat er beispielsweise zusammen mit seinem Auftrag für die Übernahme des Anhängefahrzeugs 12 erhalten.

## Patentansprüche

1. Verfahren zum Herstellen einer drahtlosen Verbindung zwischen einem ersten Sender-Empfänger in einem Anhängefahrzeug (12) mit elektronischem Bremssystem einerseits und mindestens einem zweiten Sender-Empfänger außerhalb des Anhängefahrzeugs (12) andererseits, wobei der erste Sender-Empfänger einem elektronischen Steuergerät (14, 22) im Anhängefahrzeug (12) zugeordnet ist, und wobei das Anhängefahrzeug (12) an ein Zugfahrzeug (10) gekoppelt ist und eine leitungsgebundene Verbindung besteht, über die Signale vom Zugfahrzeug (10) an das Anhängefahrzeug (12) übermittelt werden können, wobei das Verfahren die folgenden Schritte aufweist:
a) im Zugfahrzeug (10) wird ein Auslösesignal generiert und leitungsgebunden zum Steuergerät (14, 22) im Anhängefahrzeug (12) übermittelt,
b) nach Eingang des Auslösesignals im Steuergerät (14, 22) des Anhängefahrzeugs (12) stellt der erste Sender-Empfänger mit dem mindestens einen zweiten Sender-Empfänger eine vorläufige Verbindung her,
c) der mindestens eine zweite Sender-Empfänger zeigt mittels einer Ausgabeeinheit die vorläufige Verbindung oder eine andere Art einer Bestätigungsaufforderung,
d) sofern im Steuergerät (14, 22) im Anhängefahrzeug (12) innerhalb einer definierten Zeitspanne ein Signal als Bestätigung der Bestätigungsaufforderung eingeht, wird durch das Steuergerät (14, 22) eine dauerhafte Verbindung zwischen dem ersten Sender-Empfänger und dem zweiten Sender-Empfänger hergestellt.

2. Verfahren nach Anspruch 1, **dadurch gekennzeichnet, dass** als Sender-Empfänger WLAN-fähige Module und/oder Bluetooth-fähige Module verwendet werden.

3. Verfahren nach Anspruch 1 oder 2, **dadurch gekennzeichnet, dass** als Sender-Empfänger GSM-fähige Module oder andere Mobilfunk-fähige Module verwendet werden.

4. Verfahren nach Anspruch 1 oder einem der weiteren Ansprüche, **dadurch gekennzeichnet, dass** als zweiter Sender-Empfänger ein Smartphone (19) verwendet wird, insbesondere mit einer Software zum Anzeigen von Daten aus dem Anhängefahrzeug (12).

5. Verfahren nach Anspruch 1 oder einem der weiteren Ansprüche, **dadurch gekennzeichnet, dass** als Steuergerät (14) ein Bremsensteuergerät verwendet wird.

6. Verfahren nach Anspruch 1 oder einem der weiteren Ansprüche, **dadurch gekennzeichnet, dass** als Auslösesignal ein Einschalten der Zündung am Zugfahrzeug (10) verwendet wird.

7. Verfahren nach Anspruch 1 oder einem der weiteren Ansprüche, **dadurch gekennzeichnet, dass** die Zeitspanne für den Eingang des Signals zur Bestätigung bis zu 15 Sekunden lang ist, insbesondere fünf bis zehn Sekunden.

8. Verfahren nach Anspruch 1 oder einem der weiteren Ansprüche, **dadurch gekennzeichnet, dass** das Signal zur Bestätigung aus einer Betätigung einer im Fahrerhaus (18) des Zugfahrzeugs (10) angeordneten Bedieneinheit abgeleitet wird.

9. Verfahren nach Anspruch 1 oder einem der weiteren Ansprüche, **dadurch gekennzeichnet, dass** das Signal zur Bestätigung aus der Betätigung eines Fußbremspedals abgeleitet wird.

10. Verfahren nach Anspruch 1 oder einem der weiteren Ansprüche, **dadurch gekennzeichnet, dass** das Signal zur Bestätigung aus dem Lösen und Wiedereinlegen einer Parkbremse abgeleitet wird.

11. Verfahren nach Anspruch 1 oder einem der weiteren Ansprüche, **dadurch gekennzeichnet, dass** das Signal zur Bestätigung aus einer Eingabe am zweiten Sender-Empfänger und einer drahtlosen Übermittlung dieser Eingabe zum ersten Sender-Empfänger abgeleitet wird.

12. Verfahren nach Anspruch 1 oder einem der weiteren Ansprüche, **dadurch gekennzeichnet, dass** beim Eingang des Auslösesignals ein Vorratsdruck im Anhängefahrzeug (12) überprüft wird, und dass, sofern der Vorratsdruck im Anhängefahrzeug (12) beim Eingang des Auslösesignals unterhalb eines Grenzwertes liegt, insbesondere kleiner oder gleich 6 bar ist, die Bestätigungsaufforderung erst ergeht, wenn das Anhängefahrzeug (12) einen Vorratsdruck oberhalb eines Grenzwertes aufweist, insbesondere von mehr als 6 bar.

13. Verfahren nach Anspruch 1 oder einem der weiteren Ansprüche, **dadurch gekennzeichnet, dass** eine dauerhafte Verbindung nicht hergestellt wird, wenn innerhalb der definierten Zeitspanne im Anhängefahrzeug (12) Bestätigungssignale von mehr als einem zweiten Sender-Empfänger eingehen.

14. Verfahren nach Anspruch 13, **dadurch gekennzeichnet, dass** nach dem Eingang von Bestätigungssignalen von mehr als einem zweiten Sender-Empfänger eine neue Zeitspanne gestartet und eine neue Bestätigung erwartet wird.

15. Steuergerät für ein Anhängefahrzeug (12) mit elektronischem Bremssystem und dazu ausgebildet, diejenigen Schritte des Verfahrens nach einem der voranstehenden Ansprüche auszuführen, die verfahrensanspruchgemäß von dem Steuergerät ausgeführt werden.

## Claims

1. Method for establishing a wireless connection between a first transmitter-receiver in a trailer vehicle (12) with an electronic brake system on the one hand and at least one second transmitter-receiver outside of the trailer vehicle (12) on the other hand, wherein the first transmitter-receiver is associated with an electronic control unit (14, 22) in the trailer vehicle (12), and wherein the trailer vehicle (12) is coupled to a tractor vehicle (10) and there is a wired connection by means of which signals can be transmitted from the tractor vehicle (10) to the trailer vehicle (12), wherein the method has the following steps:
a) in the tractor vehicle (10) a trigger signal is generated and transmitted by cable to the control unit (14, 22) in the trailer vehicle (12),
b) following the input of the trigger signal into the control unit (14, 22) of the trailer vehicle (12), the first transmitter-receiver establishes a provisional connection with the at least one second transmitter-receiver,
c) the at least one second transmitter-receiver indicates the provisional connection or a different type of confirmation request by means of an output unit,
d) if a signal arrives in the control unit (14, 22) in the trailer vehicle (12) as an acknowledgement of the confirmation request within a defined time period, a continuous connection is established by the control unit (14, 22) between the first transmitter-receiver and the second transmitter-receiver.

2. Method according to Claim 1, **characterized in that** WLAN-compatible modules and/or Bluetooth-compatible modules are used as transmitter-receivers.

3. Method according to Claim 1 or 2, **characterized in that** GSM-compatible modules or different cellular system-compatible modules are used as transmitter-receivers.

4. Method according to Claim 1 or any one of the further claims, **characterized in that** a smartphone (19) is used as the second transmitter-receiver, in particular with software for displaying data from the trailer vehicle (12).

5. Method according to Claim 1 or any one of the further claims, **characterized in that** a brake control unit is used as the control unit (14).

6. Method according to Claim 1 or any one of the further claims, **characterized in that** switching on the ignition on the tractor vehicle (10) is used as the trigger signal.

7. Method according to Claim 1 or any one of the further claims, **characterized in that** the time period for the input of the confirmation signal is up to 15 seconds, in particular five to ten seconds.

8. Method according to Claim 1 or any one of the further claims, **characterized in that** the confirmation signal is derived from an operation of an operating unit disposed in the driver's cab (18) of the tractor vehicle (10).

9. Method according to Claim 1 or any one of the further claims, **characterized in that** the confirmation signal is derived from the operation of a foot brake pedal.

10. Method according to Claim 1 or any one of the further claims, **characterized in that** the confirmation signal is derived from the release and reapplication of a parking brake.

11. Method according to Claim 1 or any one of the further claims, **characterized in that** the confirmation signal is derived from an input to the second transmitter-receiver and the wireless transmission of said input to the first transmitter-receiver.

12. Method according to Claim 1 or any one of the further claims, **characterized in that** on the input of the trigger signal a supply pressure in the trailer vehicle (12) is checked, and that if at the input of the trigger signal the supply pressure in the trailer vehicle (12) is less than a limit value, in particular less than or equal to 6 bar, the confirmation request is only made if the trailer vehicle (12) has a supply pressure above a limit value, in particular of more than 6 bar.

13. Method according to Claim 1 or any one of the further claims, **characterized in that** a continuous connection is not established if confirmation signals from more than one second transmitter-receiver arrive in the trailer vehicle (12) within the defined time period.

14. Method according to Claim 13, **characterized in that** following the input of confirmation signals from more than one second transmitter-receiver, a new time period is started and a new confirmation is awaited.

15. Control unit for a trailer vehicle (12) with an electronic brake system and configured to execute those steps of the method according to any one of the preceding claims which are executed by the control unit in accordance with the method claims.

## Revendications

1. Procédé d'établissement d'une liaison sans fil entre un premier émetteur-récepteur dans un véhicule tracté (12) avec d'une part un système de freinage électronique et d'autre part au moins un deuxième émetteur-récepteur en dehors du véhicule tracté (12), dans lequel le premier émetteur-récepteur est associé à un appareil de commande électronique (14, 22) dans le véhicule tracté (12) et le véhicule tracté (12) est couplé à un véhicule tracteur (10) et il existe une liaison filaire par laquelle les signaux peuvent être transmis du véhicule tracteur (10) au véhicule tracté (12), le procédé comprenant les étapes suivantes :
a) dans le véhicule tracteur (10), un signal de déclenchement est généré et transmis par liaison filaire à l'appareil de commande (14, 22) dans le véhicule tracté (12),
b) après l'arrivée du signal de déclenchement dans l'appareil de commande (14, 22) du véhicule tracté (12), le premier émetteur-récepteur établit une liaison provisoire avec ledit au moins un deuxième émetteur-récepteur,
c) ledit au moins un deuxième émetteur-récepteur affiche au moyen d'une unité de sortie la liaison provisoire ou un autre type de demande de confirmation,
d) dans la mesure où, dans l'appareil de commande (14, 22) dans le véhicule tracté (12), un signal en tant que confirmation de la demande de confirmation arrive dans un laps de temps défini, l'appareil de commande (14, 22) établit une liaison permanente entre le premier émetteur-récepteur et le deuxième émetteur-récepteur.

2. Procédé selon la revendication 1, **caractérisé en ce que** des modules compatibles WLAN et/ou des modules compatibles Bluetooth sont utilisés comme émetteurs-récepteurs.

3. Procédé selon la revendication 1 ou 2, **caractérisé en ce que** des modules compatibles GSM ou d'autres compatibles avec la téléphonie mobile sont utilisés comme émetteurs-récepteurs.

4. Procédé selon la revendication 1 ou l'une quelconque des autres revendications, **caractérisé en ce qu'**un smartphone (19) est utilisé comme deuxième émetteur-récepteur, en particulier avec un logiciel pour afficher des données provenant du véhicule tracté (12) .

5. Procédé selon la revendication 1 ou l'une quelconque des autres revendications, **caractérisé en ce qu'**un appareil de commande de frein est utilisé comme appareil de commande (14).

6. Procédé selon la revendication 1 ou l'une quelconque des autres revendications, **caractérisé en ce que** le fait de mettre le contact sur le véhicule tracteur (10) est utilisé comme signal de déclenchement.

7. Procédé selon la revendication 1 ou l'une quelconque des autres revendications, **caractérisé en ce que** le laps de temps pour l'arrivée du signal de confirmation dure jusqu'à 15 secondes, en particulier de cinq à dix secondes.

8. Procédé selon la revendication 1 ou l'une quelconque des autres revendications, **caractérisé en ce que** le signal de confirmation est dérivé d'une activation d'une unité de commande disposée dans la cabine (18) du véhicule tracteur (10).

9. Procédé selon la revendication 1 ou l'une quelconque des autres revendications, **caractérisé en ce que** le signal de confirmation est dérivé de l'actionnement d'une pédale de frein.

10. Procédé selon la revendication 1 ou l'une quelconque des autres revendications, **caractérisé en ce que** le signal de confirmation est dérivé du desserrage et du resserrage d'un frein de stationnement.

11. Procédé selon la revendication 1 ou l'une quelconque des autres revendications, **caractérisé en ce que** le signal de confirmation est dérivé d'une entrée au niveau du deuxième émetteur-récepteur et d'une transmission sans fil de cette entrée au premier émetteur-récepteur.

12. Procédé selon la revendication 1 ou l'une quelconque des autres revendications, **caractérisé en ce qu'**à l'arrivée du signal de déclenchement, une pression de réserve dans le véhicule tracté (12) est vérifiée, et **en ce que**, dans la mesure où la pression de réserve dans le véhicule tracté (12) se situe au-dessous d'une valeur limite à l'arrivée du signal de déclenchement, en particulier si elle est inférieure ou égale à 6 bar, la demande de confirmation n'est émise que si le véhicule tracté (12) présente une pression de réserve au-dessus d'une valeur limite, en particulier supérieure à 6 bar.

13. Procédé selon la revendication 1 ou l'une quelconque des autres revendications, **caractérisé en ce qu'**aucune liaison permanente n'est établie si des signaux de confirmation provenant de plus d'un deuxième émetteur-récepteur arrivent dans le laps de temps défini dans le véhicule tracté (12).

14. Procédé selon la revendication 13, **caractérisé en ce qu'**après l'arrivée de signaux de confirmation de plus d'un deuxième émetteur-récepteur, un nouveau laps de temps démarre et une nouvelle confirmation est attendue.

15. Appareil de commande pour un véhicule tracté (12) avec un système de freinage électronique et conçu pour effectuer celles des étapes du procédé selon l'une quelconque des revendications précédentes qui sont effectuées par l'appareil de commande selon les revendications de procédé.
